# EUROPEAN PATENT APPLICATION

(11) **EP 4 797 040 A1**
(43) Date of publication of application: **26.08.2026**
(21) Application number: 25185156.4
(22) Date of filing: 25.06.2025
(51) Int. Cl.: G06F 1/16

(54) **ELECTRONIC DEVICE, ELECTRONIC SYSTEM, AND NON-TRANSITORY COMPUTER READABLE STORAGE MEDIUM**

(30) Priority: 21.02.2025 CN 202510195239
(71) Applicant: Getac Technology Corporation, New Taipei City 221009 (TW)
(72) Inventor: WU, Chia-Ting, 11568 Taipei City (TW)
(74) Representative: Viering, Jentschura & Partner mbB Patent- und Rechtsanwälte

(57) **Abstract**

An electronic device includes a chassis, a mechanical stress or strain sensor and a controller. The chassis includes an engaging structure. The mechanical stress or strain sensor is disposed in the chassis and is positioned corresponding to the engaging structure. The mechanical stress or strain sensor is configured to provide a sensing signal indicative of a deformation degree of the engaging structure. The controller is electrically coupled to the mechanical stress or strain sensor. The controller is configured to receive the sensing signal and, based on the sensing signal, determine whether the electronic device is connected to a docking station.

## Description

### BACKGROUND

### Technical Field

The present disclosure relates to an electronic device, an electronic system, and a non-transitory computer readable storage medium.

### Description of Related Art

Electronic devices, such as laptops, can extend their functionalities by connecting to docking stations. For example, docking stations may provide additional I/O ports for electronic devices. In certain cases, it is necessary for an electronic device to be able to detect whether it is connected to a docking station. Therefore, engineers in related fields aim to develop technology that can enable an electronic device to quickly and reliably detect whether it is connected to a docking station.

### SUMMARY

In view of the foregoing, one of the objects of the present disclosure is to provide an electronic device that can quickly and reliably detect whether it is connected to a docking station.

In accordance with an embodiment of the present disclosure, an electronic device includes a chassis, at least one mechanical stress or strain sensor and a controller. The chassis includes at least one engaging structure. The mechanical stress or strain sensor is disposed in the chassis and is positioned corresponding to the engaging structure. The mechanical stress or strain sensor is configured to provide at least one sensing signal indicative of deformation degree of the engaging structure. The controller is electrically coupled to the mechanical stress or strain sensor. The controller is configured to receive the sensing signal and, based on the sensing signal, determine whether the electronic device is connected to at least one docking station.

In one or more embodiments of the present disclosure, the electronic device further includes an electrical connector electrically coupled to the controller and configured to be connected to the docking station. The controller is further configured to send an alert signal to the docking station via the electrical connector in response to making a determination that the electronic device is connected to the docking station, and the docking station is configured to enter an active state in response to receiving the alert signal.

In one or more embodiments of the present disclosure, the engaging structure of the chassis includes a base portion. The electronic device further includes at least one circuit board disposed in the chassis and abutting an inner wall of the base portion of the engaging structure. The mechanical stress or strain sensor is disposed on the circuit board.

In one or more embodiments of the present disclosure, the electronic device further includes a fastener affixing the circuit board to the chassis. The mechanical stress or strain sensor is located between the fastener and the base portion of the engaging structure.

In one or more embodiments of the present disclosure, the inner wall of the base portion of the engaging structure has a recess, and a part of the circuit board is inserted into the recess.

In one or more embodiments of the present disclosure, the at least one sensing signal is a plurality of sensing signals and corresponds to a measurement time period, and the controller is configured to determine whether the electronic device is connected to the docking station based on the plurality of sensing signals.

In one or more embodiments of the present disclosure, the at least one docking station includes a first docking station and a second docking station. The controller is configured to make a determination that the electronic device is connected to the first docking station when a value of the sensing signal falls within a first numerical range, make a determination that the electronic device is connected to the second docking station when the value of the sensing signal falls within a second numerical range, and make a determination that the electronic device is not connected to any docking station when the value of the sensing signal falls within a third numerical range. The first numerical range, the second numerical range and the third numerical range do not overlap with one another.

In one or more embodiments of the present disclosure, the at least one engaging structure is a plurality of engaging structures, and the at least one mechanical stress or strain sensor is a plurality of mechanical stress or strain sensors. Each of the plurality of mechanical stress or strain sensors is positioned corresponding to one of the plurality of engaging structures. The controller is configured to determine whether the electronic device is connected to the docking station based on the sensing signal provided by each of the plurality of mechanical stress or strain sensors.

In one or more embodiments of the present disclosure, the at least one docking station includes a first docking station and a second docking station. The controller is configured to determine whether the electronic device is connected to the first docking station, connected to the second docking station, or not connected to any docking station based on which of the plurality of mechanical stress or strain sensors provides the sensing signal whose value reaches a threshold value.

In one or more embodiments of the present disclosure, the electronic device further includes a magnetic field sensor disposed in the chassis and configured to detect presence of a magnet on the docking station. The controller is electrically coupled to the magnetic field sensor and is configured to make a determination that the electronic device is connected to the docking station when the magnetic field sensor detects the presence of the magnet and a value of the sensing signal falls within a predetermined range.

In accordance with an embodiment of the present disclosure, an electronic system includes at least one docking station and the electronic device described above. The docking station includes at least one hook structure configured to interlock with the engaging structure of the chassis of the electronic device.

In one or more embodiments of the present disclosure, the docking station further includes a first electrical connector. The electronic device further includes a second electrical connector electrically coupled to the controller and configured to be connected to the first electrical connector. The controller is further configured to send an alert signal to the docking station via the first electrical connector and the second electrical connector in response to making a determination that the electronic device is connected to the docking station. The docking station is configured to enter an active state in response to receiving the alert signal.

In one or more embodiments of the present disclosure, the engaging structure of the chassis includes a base portion. The hook structure of the docking station is configured to press the base portion. The electronic device further includes at least one circuit board disposed in the chassis and abutting an inner wall of the base portion of the engaging structure. The mechanical stress or strain sensor is disposed on the circuit board.

In one or more embodiments of the present disclosure, the electronic device further includes a fastener affixing the circuit board to the chassis. The mechanical stress or strain sensor is located between the fastener and the base portion of the engaging structure.

In accordance with an embodiment of the present disclosure, a non-transitory computer readable storage medium is configured to store one or more instructions, which, when executed by a controller, cause the controller to: (1) receive at least one sensing signal from at least one mechanical stress or strain sensor, the sensing signal being indicative of deformation degree of at least one engaging structure of an electronic device; and (2) determine whether the electronic device is connected to at least one docking station based on the sensing signal.

In sum, the electronic device of the present disclosure utilizes mechanical stress or strain sensor to establish a mechanism for detecting its connection with a docking station. Specifically, the mechanical stress or strain sensor is used to detect whether an engaging structure of a chassis of the electronic device is pressed by a hook structure of the docking station, and a controller of the electronic device can acquire information from the mechanical stress or strain sensor and determine whether the electronic device is connected to the docking station based on the acquired information. By this arrangement, the electronic device can quickly and reliably determine its connection state with the docking state.

### BRIEF DESCRIPTION OF THE DRAWINGS

To make the objectives, features, advantages, and embodiments of the present disclosure, including those mentioned above and others, more comprehensible, descriptions of the accompanying drawings are provided as follows.
Fig. 1 illustrates an assembled top view of an electronic system in accordance with an embodiment of the present disclosure;
Fig. 2 illustrates a bottom view of the electronic device of the electronic system shown in Fig. 1;
Fig. 3 illustrates a top view of the docking station of the electronic system shown in Fig. 1;
Fig. 4 illustrates a cross-sectional view of the electronic system shown in Fig. 1 taken along the line segment 4-4'; and
Fig. 5 illustrates a partial cross-sectional view of an electronic system in accordance with another embodiment of the present disclosure.

### DETAILED DESCRIPTION

For the completeness of the description of the present disclosure, reference is made to the accompanying drawings and the various embodiments described below. Various features in the drawings are not drawn to scale and are provided for illustration purposes only. To provide full understanding of the present disclosure, various practical details will be explained in the following descriptions. However, a person with an ordinary skill in relevant art should realize that the present disclosure can be implemented without one or more of the practical details. Therefore, the present disclosure is not to be limited by these details.

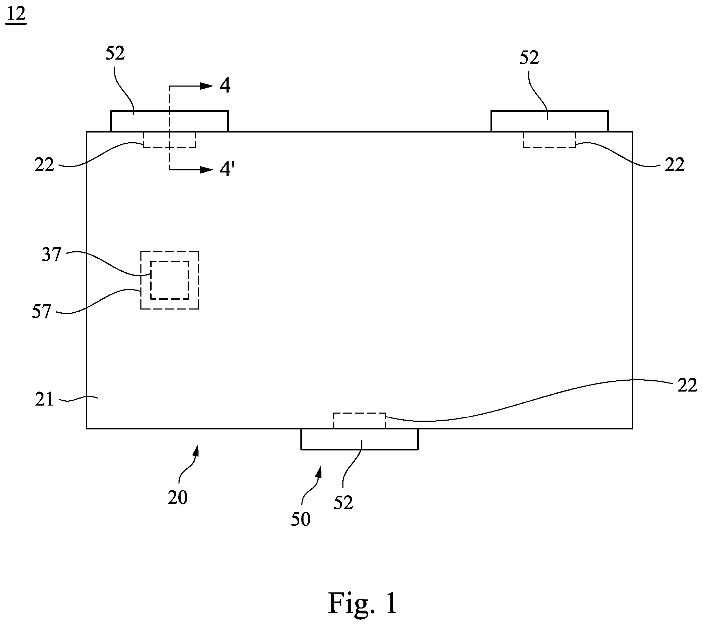

Reference is made to Fig. 1. Fig. 1 illustrates an assembled top view of an electronic system 12 in accordance with an embodiment of the present disclosure. As shown in the Fig. 1, the electronic system 12 includes an electronic device 20 and at least one docking station 50. The electronic device 20 is, for example, a laptop or a tablet computer. The electronic device 20 can be mounted on and connected to the docking station 50 to acquire additional functionalities. For example, the docking station 50 can provide the electronic device 20 with additional I/O port(s) (e.g., HDMI port, USB port, LAN port, or any combination thereof), can include external antenna for use by the electronic device 20, or can supply power to the electronic device 20. The docking station 50 is connected to a power source (not depicted), which can provide electric power necessary for the operation of the docking station 50.

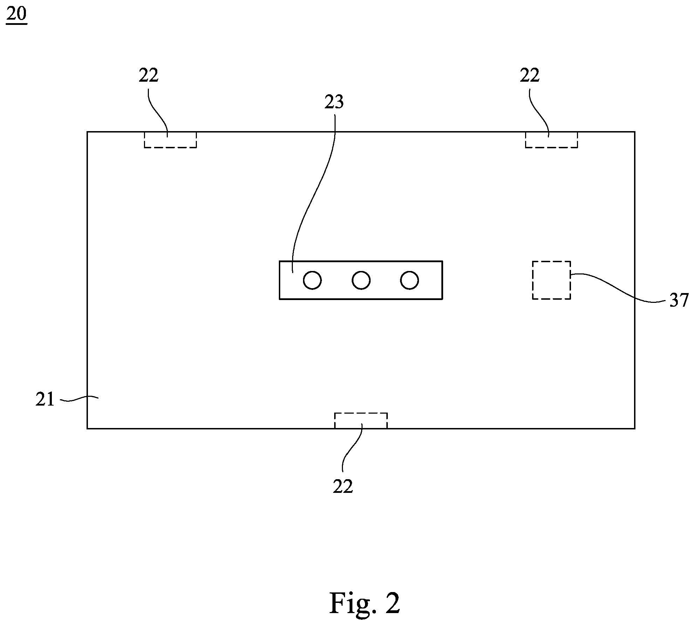

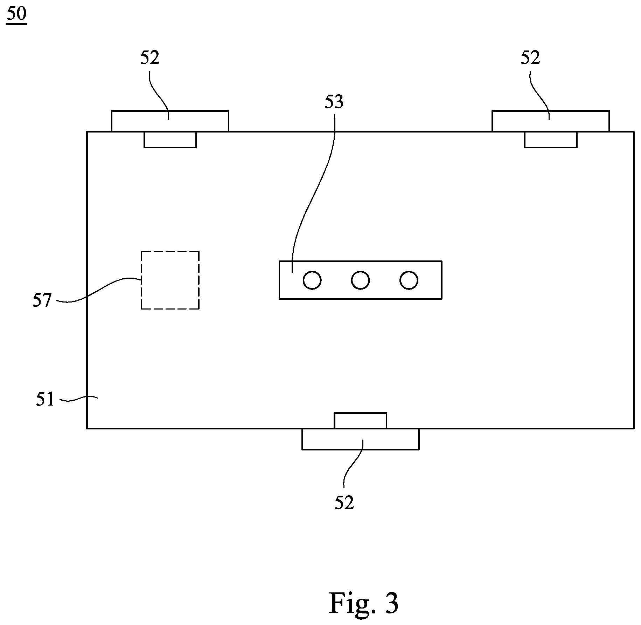

Reference is made additionally to Figs. 2 and 3. Fig. 2 illustrates a bottom view of the electronic device 20 of the electronic system 12 shown in Fig. 1, and Fig. 3 illustrates a top view of the docking station 50 of the electronic system 12 shown in Fig. 1. As shown in Figs. 1-3, the electronic device 20 includes a chassis 21. The chassis 21 has an internal space for accommodating various electronic or mechanical components of the electronic device 20, such as motherboard and various electronic components installed thereon, battery, display, heatsink, cooling fan, etc. The chassis 21 of the electronic device 20 includes at least one engaging structure 22 (shown in dotted lines) on the exterior of the chassis 21. In the illustrated embodiment, the chassis 21 includes a plurality of engaging structures 22. The engaging structures 22 are arranged on at least two edges of the chassis 21, e.g., on two opposite edges of the chassis 21.

As shown in Figs. 1-3, the docking station 50 includes a housing 51 configured to accommodate various electronic or mechanical components of the docking station 50. The housing 51 of the docking station 50 includes at least one hook structure 52. When the electronic device 20 is mounted on the docking station 50, the hook structure 52 is configured to interlock with the engaging structure 22 of the electronic device 20 to hold the electronic device 20 in place. In the illustrated embodiment, the housing 51 includes a plurality of hook structures 52. The hook structures 52 are arranged on at least two edges of the housing 51, e.g., on two opposite edges of the housing 51. The hook structures 52 and the engaging structures 22 are provided at corresponding positions on the docking station 50 and the electronic device 20. Each hook structure 52 can interlock with a respective engaging structure 22. In the illustrated embodiment, the engaging structure 22 of the electronic device 20 is a concave structure. At least part of the hook structure 52 can be inserted into the engaging structure 22 and press the engaging structure 22.

As shown in Figs. 1-3, the docking station 50 and the electronic device 20 include a first electrical connector 53 and a second electrical connector 23, respectively. When the electronic device 20 is mounted on the docking station 50, the first electrical connector 53 and the second electrical connector 23 are configured to be connected to each other. The docking station 50 and the electronic device 20 can communicate (e.g., transmitting data or sending control signals) by transmitting electronic signals via the first electrical connector 53 and the second electrical connector 23. The docking station 50 can also supply electric power to the electronic device 20 via the first electrical connector 53 and the second electrical connector 23.

As shown in Figs. 1-3, the first electrical connector 53 and the second electrical connector 23 are provided at corresponding positions on the docking station 50 and the electronic device 20. The second electrical connector 23 is, for example, disposed on a rear or bottom surface of the chassis 21. The first electrical connector 53 is, for example, disposed on a top surface of the housing 51 (i.e., the surface of the housing 51 facing the electronic device 20). As mentioned above, the electronic device 20 can be fixedly held by the docking station 50 as the hook structure 52 interlocks with the engaging structure 22. Hence, the first electrical connector 53 and the second electrical connector 23 can be connected to each other stably. In other words, the docking station 50 and the electronic device 20 can be in a stably connected state. In some embodiments, the first electrical connector 53 of the docking station 50 and the second electrical connector 23 of the electronic device 20 may include one or more pogo pins, conductive spring contacts, conductive pads, conductive pins, or any combination thereof. In the drawings, instead of showing the actual structures of the first electrical connector 53 and the second electrical connector 23 are not shown, the first electrical connector 53 and the second electrical connector 23 are represented by circles for simplicity.

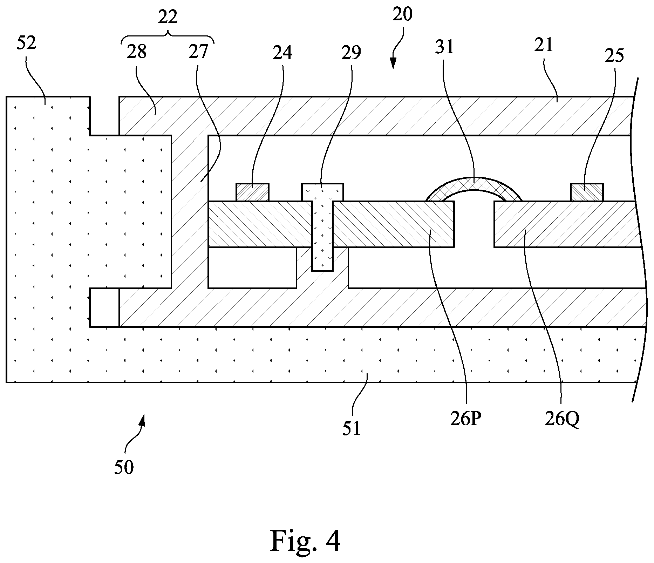

Reference is made to Fig. 4. Fig. 4 illustrates a cross-sectional view of the electronic system 12 shown in Fig. 1 taken along the line segment 4-4'. As shown in Fig. 4, the electronic device 20 further includes at least one mechanical stress or strain sensor 24. The mechanical stress or strain sensor 24 is disposed in the chassis 21 and is positioned corresponding to the engaging structure 22. The mechanical stress or strain sensor 24 is configured to provide at least one sensing signal indicative of deformation degree of the corresponding engaging structure 22. In some embodiments, each engaging structure 22 of the electronic device 20 is paired with a corresponding mechanical stress or strain sensor 24. In some embodiments, at least one, but not all, of the engaging structures 22 of the electronic device 20 is paired with a corresponding mechanical stress or strain sensor 24. In some embodiments, the mechanical stress or strain sensor 24 may include piezoelectric material or piezoresistive material.

As shown in Fig. 4, the electronic device 20 further includes a controller 25 electrically coupled to the mechanical stress or strain sensor 24. The controller 25 is configured to receive the sensing signal from the mechanical stress or strain sensor 24 and, based on the sensing signal, determine whether the electronic device 20 is connected to the docking station 50. In some embodiments, when a value of the sensing signal falls within a predetermined numerical range (e.g., when the value of the sensing signal is greater than or equal to a first threshold value, indicating that the engaging structure 22 reaches a target degree of deformation), the controller 25 can make a determination that the electronic device 20 is connected to the docking station 50. On the other hand, when the value of the sensing signal does not fall within the predetermined numerical range (e.g., when the value of the sensing signal is less than the first threshold value, indicating that the engaging structure 22 does not reach the target degree of deformation), the controller 25 can make a determination that the electronic device 20 is not connected to the docking station 50. In some embodiments, the controller 25 is an embedded controller (EC for short) of the electronic device 20.

The electronic device 20 of the present disclosure utilizes the mechanical stress or strain sensor 24 to establish a mechanism for detecting its connection with the docking station 50 and can achieve quick and reliable detection. In addition, this detection mechanism does not need to use the first electrical connector 53 and the second electrical connector 23 for detection, and thus the pins of the first electrical connector 53 and the second electrical connector 23 can be reserved for other functions.

In some embodiments, the controller 25 is electrically coupled to the second electrical connector 23 and is further configured to send an alert signal to the docking station 50 via the first electrical connector 53 and the second electrical connector 23 in response to making a determination that the electronic device 20 is connected to the docking station 50. The alert signal can trigger a transition of the docking station 50 to an active state (or working state), i.e., the docking station 50 is configured to enter the active state in response to receiving the alert signal. For example, the docking station 50 can transition from a standby state to the active state in response to receiving the alert signal. Hence, the docking station 50 can keep itself in the standby state to save power when the docking station 50 is not connected to the electronic device 20. In addition, in the standby state, the first electrically connector 53 of the docking station 50 can stay unpowered to meet safety regulations. In some embodiments, the controller 25 is further configured to instruct a display (not depicted in the drawings) of the electronic device 20 to display a notification in response to making a determination that the electronic device 20 is connected to the docking station 50. The notification notifies the user that the electronic device 20 has been connected to the docking station 50.

As shown in Fig. 4, the engaging structure 22 may include a base portion 27 and a sidewall portion 28 arranged around the base portion 27. The hook structure 52 of the docking station 50 is configured to press the base portion 27 of the engaging structure 22. More specifically, the hook structure 52 is configured to apply a pressing force to an outer wall of the base portion 27 in a direction generally normal to the outer wall of the base portion 27. In some embodiments, the electronic device 20 further includes at least one circuit board disposed in the chassis 21. The at least one circuit board includes a first circuit board 26P abutting an inner wall of the base portion 27 of the engaging structure 22. Hence, when the base portion 27 of the engaging structure 22 is pressed by the hook structure 52 of the docking station 50, the first circuit board 26P and the base portion 27 of the engaging structure 22 would both deform. The mechanical stress or strain sensor 24 is disposed on the first circuit board 26P and is electrically coupled to the first circuit board 26P. At least one first sensing signal provided by the mechanical stress or strain sensor 24 is indicative of deformation degree of the first circuit board 26P. Since the deformation degree of the first circuit board 26P and the deformation degree of the engaging structure 22 are related, the first sensing signal provided by the mechanical stress or strain sensor 24 can indicate the deformation degree of the engaging structure 22. In some embodiments, the first circuit board 26P is substantially normal to the base portion 27 of the engaging structure 22.

When the electronic device 20 includes a plurality of mechanical stress or strain sensors 24, the mechanical stress or strain sensors 24 can each be provided on a different first circuit board 26P to detect deformation of each first circuit board 26P. Multiple mechanical stress or strain sensors 24 may also be provided on a single first circuit board 26P to detect deformation at various different locations on the first circuit board 26P.

As shown in Fig. 4, in some embodiments, the electronic device 20 further includes a fastener 29 (e.g., a screw) affixing the first circuit board 26P to the chassis 21. Specifically, the fastener 29 can penetrate through the first circuit board 26P and be fixedly inserted into a fixing hole of the chassis 21, and the first circuit board 26P is affixed to the chassis 21 accordingly. In some embodiments, the mechanical stress or strain sensor 24 is located between the fastener 29 and the base portion 27 of the engaging structure 22 to facilitate detecting deformation of the first circuit board 26P.

As shown in Fig. 4, in the illustrated embodiment, the controller 25 is disposed on a second circuit board 26Q and is electrically coupled to the second circuit board 26Q. The first circuit board 26P and the second circuit board 26Q can be connected by a cable 31 (e.g., a flexible printed circuit (FPC)), such that the controller 25 can receive the first sensing signal from the mechanical stress and strain sensor 24. In other embodiments, the controller 25 and the mechanical stress and strain sensor 24 may be disposed on the same circuit board and be electrically coupled to each other via circuits arranged on the surface or the interior of the circuit board, such that the controller 25 can receive the first sensing signal from the mechanical stress and strain sensor 24.

In some embodiments, the electronic device 20 can include a plurality of engaging structures 22 and a plurality of mechanical stress or strain sensors 24. Each of the plurality of mechanical stress or strain sensors 24 is positioned corresponding to one of the plurality of engaging structures 22. The controller 25 is configured to determine whether the electronic device 20 is connected to the docking station 50 based on the first sensing signal provided by each of the plurality of mechanical stress or strain sensors 24. In some embodiments, when the value of the first sensing signal provided by each of the mechanical stress or strain sensors 24 falls within the predetermined numerical range mentioned above, the controller 25 can make a determination that the electronic device 20 is connected to the docking station 50. On the other hand, when the value of the first sensing signal provided by any one of the mechanical stress or strain sensors 24 does not fall within the predetermined numerical range, the controller 25 can make a determination that the electronic device 20 is not connected to the docking station 50.

**In** some embodiments, the at least one first sensing signal provided by the mechanical stress or strain sensor 24 is plural and corresponds to a measurement time period, and the controller 25 is configured to determine whether the electronic device 20 is connected to the docking station 50 based on the plurality of first sensing signals. By this arrangement, the controller 25 can be prevented from incorrectly identifying the electronic device 20 as being connected or disconnected to the docking station 50.

In some embodiments, when the controller 25 records a connection state of the electronic device 20 and the docking station 50 as "disconnected", the controller 25 may receive the first sensing signal from the mechanical stress or strain sensor 24 at multiple different time points over a time period (e.g., receiving the first sensing signal every 10ms for 200ms, thus receiving a total of twenty first sensing signals over the 200ms period), and if the number of the first sensing signals whose value falls within the predetermined numerical range mentioned above is greater than or equal to a predetermined number threshold, then the controller 25 can determine that the connection state of the electronic device 20 and the docking station 50 has been changed to "connected". Otherwise, the electronic device 20 and the docking station 50 remains in the "disconnected" state.

In some embodiments, when the controller 25 records the connection state of the electronic device 20 and the docking station 50 as "connected", the controller 25 may receive the first sensing signal from the mechanical stress or strain sensor 24 at multiple different time points over a time period (e.g., receiving the first sensing signal every 10ms for 200ms, thus receiving a total of twenty first sensing signals over the 200ms period), and if the number of the first sensing signals whose value does not fall within the predetermined numerical range mentioned above is greater than or equal to the predetermined number threshold, then the controller 25 can determine that the connection state of the electronic device 20 and the docking station 50 has been changed to "disconnected". Otherwise, the electronic device 20 and the docking station 50 remains in the "connected" state.

In some embodiments, there can be multiple different types of docking stations 50, which may include vehicle dock and office dock, and different types of docking stations 50 can provide different functions. The controller 25 can identify the type of docking station 50 the electronic device 20 is connected to and enable the electronic device 20 to perform different operations when being connected to different types of docking stations 50.

In some embodiments, the controller 25 is configured to determine whether the electronic device 20 is connected to a first docking station, connected to a second docking station, or not connected to any docking station based on which of the plurality of mechanical stress or strain sensors 24 provides the first sensing signal whose value reaches (i.e., is greater than or equal to) the first threshold value. The first docking station and the second docking station are different types of docking stations. In such embodiments, the controller 25 relies on the fact that the hook structures 52 of different types of docking stations 50 are provided at different positions to differentiate between the different types of docking stations 50.

For example, the electronic device 20 may include three engaging structures 22 each paired with one mechanical stress or strain sensor 24. The electronic device 20 can differentiate between two different types of docking stations 50, a first docking station and a second docking station. The first docking station may include two hook structures 52 interlocking with the first and second engaging structures 22 of the electronic device 20, respectively. The second docking station may include two hook structures 52 interlocking with the first and third engaging structures 22 of the electronic device 20, respectively. In this case, when the first and second mechanical stress or strain sensors 24 each provide the first sensing signal whose value reaches the first threshold value (and the value of the first sensing signal provided by the third mechanical stress or strain sensor 24 is below the first threshold value), the controller 25 can determine that the electronic device 20 is connected to the first docking station. When the first and third mechanical stress or strain sensors 24 each provide the first sensing signal whose value reaches the first threshold value (and the value of the first sensing signal provided by the second mechanical stress or strain sensor 24 is below the first threshold value), the controller 25 can determine that the electronic device 20 is connected to the second docking station. Otherwise, the controller 25 can determine that the electronic device 20 is connected to any docking station.

In some embodiments, the controller 25 is configured to make a determination that the electronic device 20 is connected to the first docking station when the value of the first sensing signal provided by the mechanical stress or strain sensor 24 falls within a first numerical range, make a determination that the electronic device 20 is connected to a second docking station when the value of the first sensing signal falls within a second numerical range, and make a determination that the electronic device 20 is not connected to any docking station when the value of the first sensing signal falls within a third numerical range. The first numerical range, the second numerical range and the third numerical range do not overlap with one another. In such embodiments, the controller 25 relies on the fact that the hook structures 52 of different types of docking stations 50 apply different pressing force to the engaging structure 22 of the electronic device 20 to differentiate between the different types of docking stations 50.

For example, if the hook structure 52 of the first docking station applies larger pressing force than the hook structure 52 of the second docking station, then the controller 25 can make a determination that the electronic device 20 is connected to the first docking station when the value of the first sensing signal is greater than or equal to a second threshold value, make a determination that the electronic device 20 is connected to the second docking station when the value of the first sensing signal is greater than or equal to a third threshold value and is less than the second threshold value, and make a determination that the electronic device 20 is not connected to any docking station when the value of the first sensing signal is less than the third threshold value.

In some embodiments, the controller 25 may include a built-in non-transitory computer readable storage medium (e.g., flash memory or EEPROM; not depicted in the drawings) which can store one or more instructions executable by the controller 25. The one or more instructions, when executed by the controller 25, causes the controller 25 to perform the various tasks or operations of the controller 25 described herein.

Returning to Fig. 1, in some embodiments, the docking station 50 further includes a magnet 57 disposed in the interior of the housing 51 or on the surface of the housing 51. Correspondingly, the electronic device 20 further includes a magnetic field sensor 37 (e.g., a Hall effect sensor) disposed in the chassis 21 and configured to detect presence of the magnet 57 on the docking station 50. The controller 25 is electrically coupled to the magnetic field sensor 37 and is configured to make a determination that the electronic device 20 is connected to the docking station 50 when the magnetic field sensor 37 detects the presence of the magnet 57 and the value of the first sensing signal falls within the predetermined numerical range mentioned above. In some embodiments, the magnetic field sensor 37 is configured to provide at least one second sensing signal indicative a magnetic field strength sensed by the magnetic field sensor 37. The controller 25 is configured to receive the second sensing signal from the magnetic field sensor 37. When the second sensing signal indicates that the magnetic field strength is greater than or equal to a fourth threshold value, the controller 25 makes a determination that the magnetic field sensor 37 detects the presence of the magnet 57 on the docking station 50.

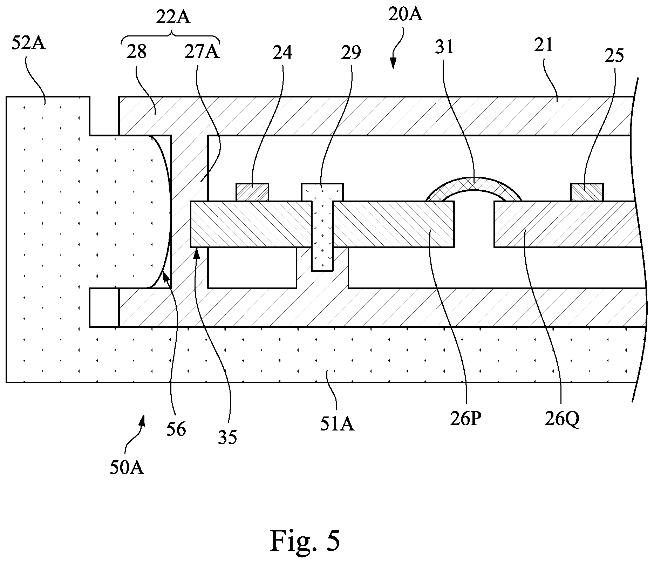

Reference is made to Fig. 5. Fig. 5 illustrates a partial cross-sectional view of an electronic system in accordance with another embodiment of the present disclosure. The present embodiment differs from the previous embodiment in that: in the present embodiment, the inner wall of the base portion 27A of the engaging structure 22A of the electronic device 20A has a recess 35, and a part of the first circuit board 26P is inserted into the recess 35. In other words, the base portion 27A of the engaging structure 22A includes a first portion and a second portion having a greater thickness than the first portion, and the first circuit board 26P abuts the first portion of the base portion 27A. By this arrangement, when the hook structure 52A of the housing 51A of the docking station 50A presses the engaging structure 22A and causes deformation of the engaging structure 22A, the first circuit board 26P can deform more easily.

As shown in Fig. 5, the present embodiment further differs from the previous embodiment in that: the hook structure 52A of the docking station 50A has rounded corners 56, such that a central portion of the hook structure 52A is projected compared to a peripheral portion of the hook structure 52A. By this arrangement, the hook structure 52A of the docking station 50A can easily apply pressing force to the engaging structure 22A of the electronic device 20A, and the engaging structure 22A and the first circuit board 26P can have a more easily detectable deformation.

In sum, the electronic device of the present disclosure utilizes mechanical stress or strain sensor to establish a mechanism for detecting its connection with a docking station. Specifically, the mechanical stress or strain sensor is used to detect whether an engaging structure of a chassis of the electronic device is pressed by a hook structure of the docking station, and a controller of the electronic device can acquire information from the mechanical stress or strain sensor and determine whether the electronic device is connected to the docking station based on the acquired information. By this arrangement, the electronic device can quickly and reliably determine its connection state with the docking state.

## Claims

1. An electronic device, **characterized by** comprising:
a chassis (21) comprising at least one engaging structure (22, 22A);
at least one mechanical stress or strain sensor (24) disposed in the chassis and positioned corresponding to the at least one engaging structure, the at least one mechanical stress or strain sensor being configured to provide at least one sensing signal indicative of deformation degree of the at least one engaging structure; and
a controller (25) electrically coupled to the at least one mechanical stress or strain sensor, wherein the controller is configured to receive the at least one sensing signal and, based on the at least one sensing signal, determine whether the electronic device is connected to at least one docking station (50, 50A).

2. The electronic device of claim 1, further comprising an electrical connector (23) electrically coupled to the controller (25) and configured to be connected to the at least one docking station (50, 50A), wherein the controller is further configured to send an alert signal to the at least one docking station via the electrical connector in response to making a determination that the electronic device is connected to the at least one docking station, and the at least one docking station is configured to enter an active state in response to receiving the alert signal.

3. The electronic device of claim 1 or 2, wherein the at least one engaging structure (22, 22A) of the chassis (21) comprises a base portion (27, 27A), wherein the electronic device (20, 20A) further comprises at least one circuit board (26P) disposed in the chassis and abutting an inner wall of the base portion of the at least one engaging structure, wherein the at least one mechanical stress or strain sensor (24) is disposed on the at least one circuit board.

4. The electronic device of claim 3, further comprising a fastener (29) affixing the at least one circuit board (26P) to the chassis (21), wherein the at least one mechanical stress or strain sensor (24) is located between the fastener and the base portion (27, 27A) of the at least one engaging structure (22, 22A).

5. The electronic device of claim 3 or 4, wherein the inner wall of the base portion (27A) of the at least one engaging structure (22A) has a recess (35), and a part of the at least one circuit board (26P) is inserted into the recess.

6. The electronic device of any preceding claim, wherein the at least one sensing signal is a plurality of sensing signals and corresponds to a measurement time period, and the controller (25) is configured to determine whether the electronic device (20, 20A) is connected to the at least one docking station (50, 50A) based on the plurality of sensing signals.

7. The electronic device of any preceding claim, wherein the at least one docking station (50, 50A) comprises a first docking station and a second docking station, the controller (25) is configured to make a determination that the electronic device (20, 20A) is connected to the first docking station when a value of the at least one sensing signal falls within a first numerical range, make a determination that the electronic device is connected to the second docking station when the value of the at least one sensing signal falls within a second numerical range, and make a determination that the electronic device is not connected to any docking station when the value of the at least one sensing signal falls within a third numerical range, wherein the first numerical range, the second numerical range, and the third numerical range do not overlap with one another.

8. The electronic device of any of claims 1-6, wherein the at least one engaging structure (22, 22A) is a plurality of engaging structures, the at least one mechanical stress or strain sensor (24) is a plurality of mechanical stress or strain sensors, each of the plurality of mechanical stress or strain sensors is positioned corresponding to one of the plurality of engaging structures, and the controller (25) is configured to determine whether the electronic device (20, 20A) is connected to the at least one docking station (50, 50A) based on the at least one sensing signal provided by each of the plurality of mechanical stress or strain sensors.

9. The electronic device of claim 8, wherein the at least one docking station (50, 50A) comprises a first docking station and a second docking station, the controller (25) is configured to determine whether the electronic device (20, 20A) is connected to the first docking station, connected to the second docking station, or not connected to any docking station based on which of the plurality of mechanical stress or strain sensors (24) provides the at least one sensing signal whose value reaches a threshold value.

10. The electronic device of any preceding claim, further comprising a magnetic field sensor (37) disposed in the chassis (21) and configured to detect presence of a magnet (57) on the at least one docking station (50, 50A), wherein the controller (25) is electrically coupled to the magnetic field sensor and is configured to make a determination that the electronic device (20, 20A) is connected to the at least one docking station when the magnetic field sensor detects the presence of the magnet and a value of the at least one sensing signal falls within a predetermined range.

11. An electronic system, **characterized by** comprising:
at least one docking station (50, 50A) comprising at least one hook structure (52, 52A); and
an electronic device (20, 20A), comprising:
a chassis (21) comprising at least one engaging structure (22, 22A), wherein the at least one hook structure of the at least one docking station is configured to interlock with the at least one engaging structure;
at least one mechanical stress or strain sensor (24) disposed in the chassis and positioned corresponding to the at least one engaging structure, the at least one mechanical stress or strain sensor being configured to provide at least one sensing signal indicative of deformation degree of the at least one engaging structure; and
a controller (25) electrically coupled to the at least one mechanical stress or strain sensor, wherein the controller is configured to receive the at least one sensing signal and, based on the at least one sensing signal, determine whether the electronic device is connected to the at least one docking station.

12. The electronic system of claim 11, wherein the at least one docking station (50, 50A) further comprises a first electrical connector (53), the electronic device (20, 20A) further comprises a second electrical connector (23) electrically coupled to the controller (25) and configured to be connected to the first electrical connector, wherein the controller is further configured to send an alert signal to the at least one docking station via the first electrical connector and the second electrical connector in response to making a determination that the electronic device is connected to the at least one docking station, and the at least one docking station is configured to enter an active state in response to receiving the alert signal.

13. The electronic system of claim 11 or 12, wherein the at least one engaging structure (22, 22A) of the chassis (21) comprises a base portion (27, 27A), the at least one hook structure (52, 52A) of the at least one docking station (50, 50A) is configured to press the base portion, wherein the electronic device further comprises at least one circuit board (26P) disposed in the chassis and abutting an inner wall of the base portion of the at least one engaging structure, wherein the at least one mechanical stress or strain sensor (24) is disposed on the at least one circuit board.

14. The electronic system of claim 13, wherein the electronic device (20, 20A) further comprises a fastener (29) affixing the at least one circuit board (26P) to the chassis (21), wherein the at least one mechanical stress or strain sensor (24) is located between the fastener (29) and the base portion (27, 27A) of the at least one engaging structure (22, 22A).

15. A non-transitory computer readable storage medium configured to store one or more instructions, **characterized in that**, the one or more instructions, when executed by a controller (25), cause the controller to:
receive at least one sensing signal from at least one mechanical stress or strain sensor (24), the at least one sensing signal being indicative of deformation degree of at least one engaging structure (22, 22A) of an electronic device (20, 20A); and
determine whether the electronic device is connected to at least one docking station (50, 50A) based on the at least one sensing signal.
